# EUROPEAN PATENT APPLICATION

(11) **EP 4 734 269 A1**
(43) Date of publication of application: **29.04.2026**
(21) Application number: 24854487.6
(22) Date of filing: 16.08.2024
(51) Int. Cl.: H01M 50/533, H01M 50/534

(54) **ELECTRODE CURRENT COLLECTOR, ELECTRODE ASSEMBLY COMPRISING ELECTRODE CURRENT COLLECTOR, AND METHOD FOR MANUFACTURING ELECTRODE CURRENT COLLECTOR**

(30) Priority: 17.08.2023 KR 20230107719; 13.08.2024 KR 20240108651
(71) Applicant: LG Energy Solution, Ltd., Seoul 07335 (KR)
(72) Inventor: KANG, Gyung Soo, Daejeon 34122 (KR); HONG, Eui Jin, Daejeon 34122 (KR); LEE, Hyo Seo, Daejeon 34122 (KR)
(74) Representative: Hoffmann Eitle
(86) International application number: PCT/KR2024/012234
(87) International publication number: WO 2025/037936

(57) **Abstract**

The present invention relates to an electrode current collector, an electrode assembly comprising the electrode current collector, and a method for manufacturing the electrode current collector. The electrode current collector according to the present invention, which is an electrode current collector including an electrode tab extending at an end thereof, comprises: a polymer layer; and a first metal layer and a second metal layer stacked on both surfaces of the polymer layer, wherein in the electrode tab, a metal rib extending to the polymer layer is provided on the first metal layer.

## Description

### TECHNICAL FIELD

### CROSS-REFERENCE TO RELATED APPLICATIONS

The present application claims priority to Korean Patent Application No. 10-2023-0107719 filed on August 17, 2023 and Korean Patent Application No. 10-2024-0108651 filed on August 13, 2024 in the Republic of Korea, the disclosures of which are incorporated herein by reference.

### TECHNICAL FIELD

The present disclosure relates to an electrode current collector, an electrode assembly including the electrode current collector, and a method for manufacturing the electrode current collector.

### BACKGROUND ART

Secondary batteries are rechargeable unlike primary batteries, and have been heavily researched and developed in recent years due to their potential for miniaturization and large capacity. As the technology development and demand for electric vehicles, energy storage systems (ESSs), mobile devices, and the like increase, the demand for secondary batteries as an energy source is rapidly increasing. However, the safety of secondary batteries is not keeping up with the pace of technological advancement. To solve this problem, there is a method for improving safety by creating an electrical short before the abnormal behavior of secondary batteries to drain energy or by short-circuiting the electrical connection.

Secondary batteries are classified into coin type batteries, cylindrical batteries, prismatic batteries, and pouch type batteries depending on the shape of a battery case. In a secondary battery, the electrode assembly mounted inside the battery case is a power generating element that can be charged and discharged with a stacked structure of electrodes and separators.

The electrode assembly may be roughly classified into a jelly-roll type in which a sheet-like positive electrode and negative electrode where an active material is applied to a current collector having a separator interposed therebetween are wound, a stack type in which multiple positive electrodes and negative electrodes are sequentially stacked with a separator interposed therebetween, and a stack/folding type in which the stack-type unit cells are wound with a long separation film.

### SUMMARY

### TECHNICAL PROBLEM

The present disclosure is directed to providing an electrode current collector having improved weldability, an electrode assembly including the electrode current collector, and a method for manufacturing the electrode current collector.

### TECHNICAL SOLUTION

An electrode current collector according to an embodiment of the present disclosure is an electrode current collector including an electrode tab extending at an end, and may include a polymer layer and a first metal layer and a second metal layer laminated on both surfaces of the polymer layer, wherein in the electrode tab, the first metal layer may have metal ribs extending to the polymer layer.

Additionally, an electrode assembly according to an embodiment of the present disclosure is an electrode assembly in which electrodes and separators are alternately stacked, wherein the electrode may include an electrode current collector including an electrode tab extending at an end, and the electrode current collector may include a polymer layer and a first metal layer and a second metal layer laminated on both surfaces of the polymer layer in the stacking direction, wherein in the electrode tab, the first metal layer may have metal ribs extending to the polymer layer.

In addition, a method for manufacturing the electrode current collector according to an embodiment of the present disclosure may include a rib formation process for forming metal ribs extending in the stacking direction on a first metal layer; a polymer lamination process for laminating a polymer layer on the first metal layer after the rib formation process; a second metal layer lamination process for laminating a second metal layer on the polymer layer after the polymer lamination process to form a stack; and a tab formation process for notching an end portion of the stack to form an electrode tab.

### ADVANTAGEOUS EFFECTS

According to the present disclosure, in an electrode current collector in which metal layers are laminated on both surfaces of a polymer layer, metal ribs extending toward the polymer layer are provided in the metal layer located at the part forming the electrode tab, thereby having an effect of significantly improving weldability. Additionally, as a result, there is an effect of significantly improving the weldability between the electrode tabs of the electrode current collector and the weldability between the electrode tabs and the electrode lead.

### BRIEF DESCRIPTION OF THE DRAWINGS

FIG. 1 is a perspective view showing an electrode current collector according to an embodiment of the present disclosure.
FIG. 2 is a cross-sectional view showing a first example of an electrode current collector according to an embodiment of the present disclosure.
FIG. 3 is a perspective view of an essential portion showing an example of an electrode current collector according to an embodiment of the present disclosure.
FIG. 4 is a perspective view of an essential portion showing another example of an electrode current collector according to an embodiment of the present disclosure.
FIG. 5 is a cross-sectional view showing a second example of an electrode current collector according to an embodiment of the present disclosure.
FIG. 6 is cross-sectional view showing an electrode assembly according to an embodiment of the present disclosure.
FIG. 7 is a side view showing an electrode assembly according to an embodiment of the present disclosure.
FIG. 8 is a cross-sectional view showing a secondary battery including an electrode current collector according to an embodiment of the present disclosure.
FIG. 9 is a cross-sectional view showing a rib formation process in a method for manufacturing an electrode current collector according to an embodiment of the present disclosure.
FIG. 10 is a cross-sectional view showing a polymer lamination process in a method for manufacturing an electrode current collector according to an embodiment of the present disclosure.
FIG. 11 is a cross-sectional view showing a second metal layer lamination process in a method for manufacturing an electrode current collector according to an embodiment of the present disclosure.
FIG. 12 is a perspective view showing an example of a rib formation process and a polymer lamination process in a method for manufacturing an electrode current collector according to an embodiment of the present disclosure.
FIG. 13 is a perspective view showing another example of a rib formation process and a polymer lamination process in a method for manufacturing an electrode current collector according to an embodiment of the present disclosure.
FIG. 14 is a perspective view showing a second metal layer lamination process in a method for manufacturing an electrode current collector according to an embodiment of the present disclosure.
FIG. 15 is a perspective view showing a tab formation process in a method for manufacturing an electrode current collector according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Electrode current collector according to embodiment

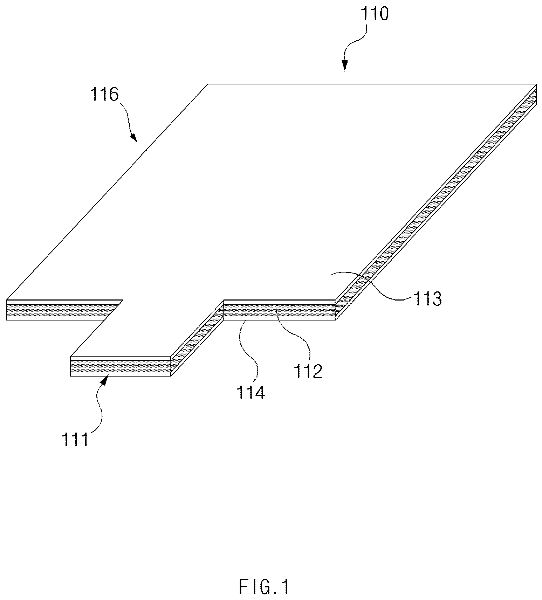

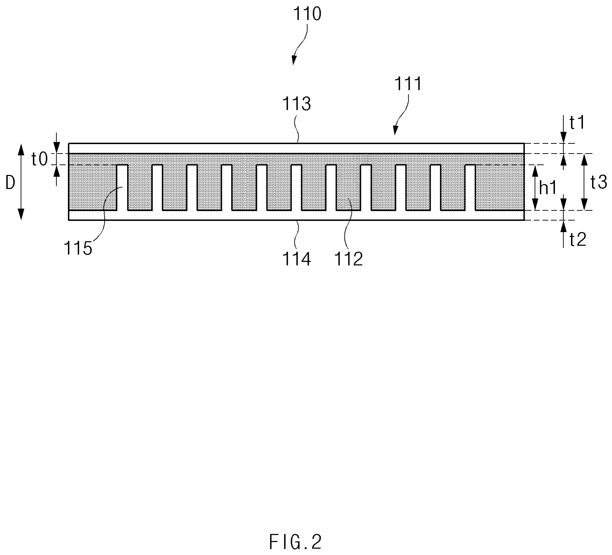

FIG. 1 is a perspective view showing an electrode current collector according to an embodiment of the present disclosure, and FIG. 2 is a cross-sectional view showing an electrode current collector according to an embodiment of the present disclosure.

Referring to FIGS. 1 and 2, an electrode current collector 110 according to an embodiment of the present disclosure is an electrode current collector 110 including an electrode tab 111 extending at an end, and includes a polymer layer 112 and a first metal layer 114 and a second metal layer 113 laminated on both surfaces of the polymer layer 112, wherein in the electrode tab 111, the first metal layer 114 has metal ribs 115 extending to the polymer layer 112.

More specifically, the electrode current collector 110 includes an electrode tab 111 extending at an end. That is, the electrode tab 111 may be formed by notching the end of the electrode current collector 110.

Additionally, the electrode current collector 110 includes a polymer layer 112 and a first metal layer 114 and a second metal layer 113 laminated on both surfaces of the polymer layer 112 in the stacking direction D. Here, the polymer layer 112 is a layer including a polymer material, and the first metal layer 114 and the second metal layer 113 are layers including a metal material. Therefore, the electrode current collector 110 is provided in a form where the first metal layer 114 and the second metal layer 113 are laminated on both surfaces of the polymer layer 112, which may prevent the occurrence of a fire due to excessive current density occurring when formed of only a metal material. In addition, the electrode current collector 110 may form the first metal layer 114 and the second metal layer 113 thinly on both surfaces thereof, so that the risk of a shorting due to a metal burr or the like may be low in the event of breaking.

In addition, for example, the thickness t3 of the polymer layer 112 may be 2 to 14 um.

And, for example, the thicknesses t1, t2 of the first metal layer 114 and the second metal layer 113 may be 0.2 to 3 um. Here, specifically, for example, the thicknesses t1, t2 of the first metal layer 114 and the second metal layer 113 may be 0.2 to 2 um.

Therefore, the thicknesses t1, t2 of the first metal layer 114 and the second metal layer 113 may be formed to be the lower limit value of 0.2 um or more, so that the electrical resistivity may be low. Accordingly, the function as an electrical connection, which is a required characteristic of the current collector foil, may be not limited. That is, the function as a battery may not be weakened.

Meanwhile, the thicknesses t1, t2 of the first metal layer 114 and the second metal layer 113 may be formed to be the upper limit value of 2 um or less, so that the energy density may be high. Additionally, the disadvantage of the conventional metal foil, which is the adverse effect on the safety enhancement through electrical insulation during the nail test, may be significantly reduced. Specifically, the electrode current collector 110 is provided in a form where the first metal layer 114 and the second metal layer 113 are laminated on both surfaces of the polymer layer 112, so that the first metal layer 114 and the second metal layer 113 may collapse due to the shrinkage of the polymer layer in the nail test, thereby enhancing safety through electrical insulation, but if the first metal layer 114 and the second metal layer 113 are too thick, the polymer layer 112 may not exert the safety enhancement function, thereby deteriorating safety. Therefore, the thicknesses t1, t2 of the first metal layer 114 and the second metal layer 113 are formed to be the upper limit value of 2 um or less, so that the polymer layer 112 including the polymer material may exert the safety enhancement function. Here, the nail test is to test safety by penetrating a nail.

Meanwhile, the thickness t1 of the first metal layer 114 may be, as an example, the same as the thickness t2 of the second metal layer 113.

Additionally, the thickness t1 of the first metal layer 114 may be, as another example, thicker than the thickness t2 of the second metal layer 113. Accordingly, the electrode current collector 110 may be easy to manufacture.

The metal ribs 115 may be provided to extend from the first metal layer 114 to the polymer layer 112 in the electrode tab.

Additionally, the metal ribs 115 may protrude from the inner surface of the first metal layer 114 to the polymer layer 112 and may be formed along the inner surface of the first metal layer 114.

In addition, the metal ribs 115 may include the same material as the material of the first metal layer 114 and the second metal layer 113.

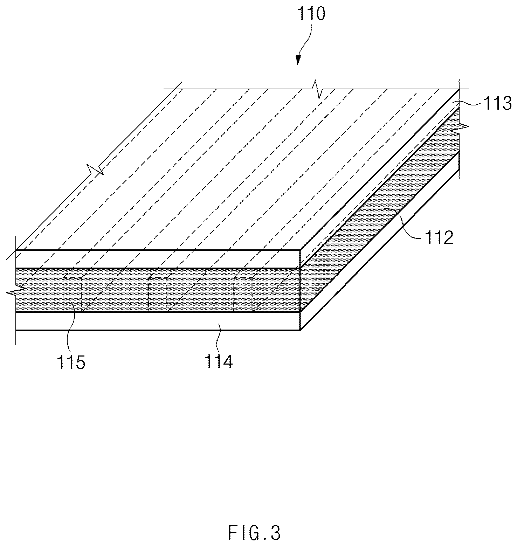

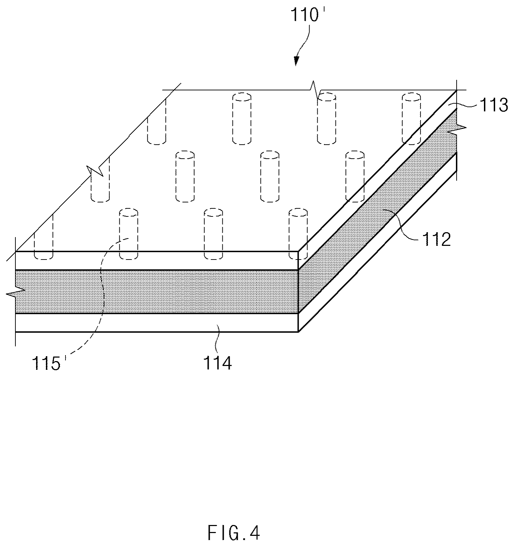

FIG. 3 is a perspective view of an essential portion showing an example of an electrode current collector according to an embodiment of the present disclosure, and FIG. 4 is a perspective view of an essential portion showing another example of an electrode current collector according to an embodiment of the present disclosure.

Referring to FIG. 3, the metal ribs 115 may be formed in the form of rectangular walls, as an example, and may be provided in multiples at regular intervals.

Referring to FIG. 4, the metal ribs 115' may be provided in the form of multiple cylinders, as another example.

Meanwhile, referring to FIG. 2, as a first example of the electrode current collector 110, the ends of the metal ribs 115 may be spaced apart from the second metal layer 113 by a regular interval.

Accordingly, the ends of the metal ribs 115 are spaced apart from the second metal layer 113 by a regular interval, so that the first metal layer 114 and the second metal layer 113 may not be connected, thereby maintaining the safety effect of the metalized electrode current collector 110 in which the metal layer is laminated on both surfaces of the polymer layer 112.

Additionally, the spacing between the ends of the metal ribs 115 and the second metal layer 113 may be 2 to 8 um. Therefore, the spacing t0 between the ends of the metal ribs 115 and the second metal layer 113 is formed to be the lower limit value of 2 um or more, so that thermal safety may be significantly improved. Meanwhile, the spacing t0 between the ends of the metal rib 115 and the second metal layer 113 is formed to be the upper limit value of 8 um or less, so that welding may be significantly facilitated.

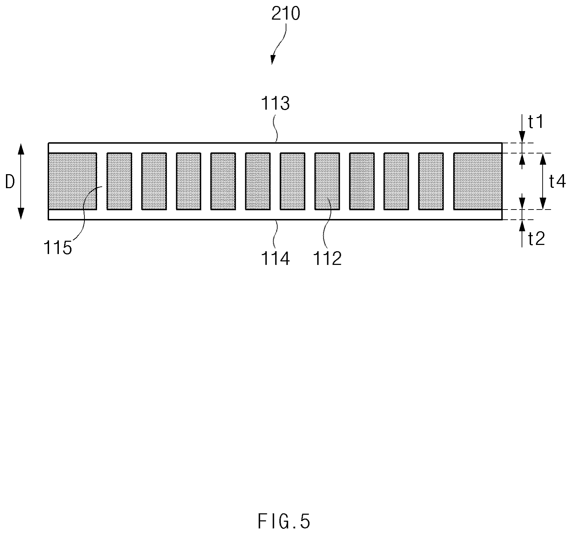

FIG. 5 is a cross-sectional view showing a second example of an electrode current collector according to an embodiment of the present disclosure.

Additionally, referring to FIG. 5, as a second example of the electrode current collector 210, the ends of the metal ribs 115 may be in contact with the second metal layer 113. Accordingly, the electrical resistivity may be lowered.

Meanwhile, referring to FIGS. 1 and 2, the electrode current collector 110 may include a body 116 having an electrode active material coated on the outer surface, and an electrode tab 111 extending from the body 116. In this case, metal ribs 115 may be further provided on the body 116. That is, in the electrode current collector 110, the metal ribs 115 may be provided to extend from the first metal layer 114 located on the body 116 and the electrode tab 111 to the polymer layer 112.

Referring to FIGS. 1 and 2, the electrode current collector 110 according to an embodiment of the present disclosure configured as described above is provided with metal ribs 115 extending toward the polymer layer 112 in the metal layer located at the part forming the electrode tab 111 in the electrode current collector 110 in which metal layers are laminated on both surfaces of the polymer layer 112, thereby having the effect of significantly improving weldability. That is, when the electrode tabs 111 respectively provided on the multiple electrode current collectors 110 are mutually welded to form an electrode assembly and when the electrode tabs 111 and the electrode leads are welded, the metal ribs 115 extend toward the polymer layer 112 at the welded portion, so that the thickness of the polymer layer 112 located at the welded portion is formed thinly, and the interval between the first and second metal layers 114, 113 is narrowed, thereby having the effect of significantly improving welding. Ultimately, when welding using a laser or ultrasonic wave, it is possible to prevent weldability from deteriorating because the laser or ultrasonic wave may not pass through the polymer layer 112.

### Electrode assembly according to embodiment

Hereinafter, an electrode assembly according to an embodiment of the present disclosure will be described.

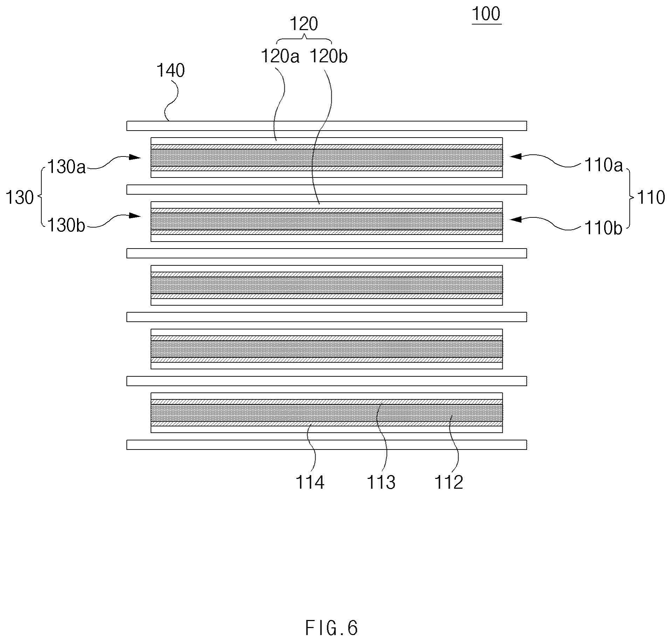

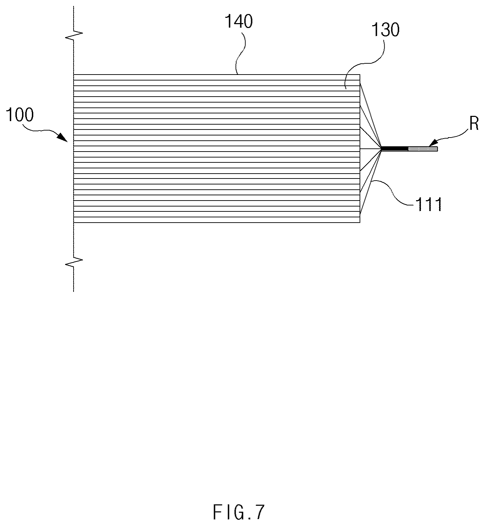

FIG. 6 is cross-sectional view showing an electrode assembly according to an embodiment of the present disclosure, and FIG. 7 is a side view showing an electrode assembly according to an embodiment of the present disclosure.

Referring to FIGS. 1, 2, 5, and 6, the electrode assembly 100 according to an embodiment of the present disclosure is an electrode assembly 100 in which electrodes 130 and separators 140 are alternately stacked, wherein the electrode 130 includes an electrode current collector 110 including an electrode tab 111 extending at an end, and the electrode current collector 110 includes a polymer layer 112 and a first metal layer 114 and a second metal layer 113 laminated on both surfaces of the polymer layer 112 in the stacking direction D, wherein in the electrode tab 111, the first metal layer 114 has metal ribs extending to the polymer layer 112.

The electrode assembly 100 according to an embodiment of the present disclosure is an electrode assembly 100 including an electrode current collector according to the above-described embodiment. Therefore, this embodiment is to be described by omitting or briefly describing the content overlapping with the above-described embodiment and focusing on differences.

More specifically, the electrode assembly 100 according to an embodiment of the present disclosure is a power generating element that can be charged and discharged, and forms a structure in which electrodes 130 and separators 140 are combined and alternately stacked.

The electrode 130 includes an electrode current collector 110 including an electrode tab 111 extending at an end.

Here, the electrode 130 may include an electrode current collector 110 and an electrode active material 120 coated on one or both surfaces of the electrode current collector 110. In this case, the electrode 130 may be formed with a coated portion where the electrode active material 120 is coated on the electrode current collector 110 and an uncoated portion where the electrode active material 120 is not coated on the electrode current collector 110. In this case, an electrode tab 111 may be positioned in the uncoated portion of the electrode current collector 110.

The electrode current collector 110 may include a polymer layer 112 and a first metal layer 114 and a second metal layer 113 laminated on both surfaces of the polymer layer 112 in the stacking direction D. In this case, in the electrode tab 111, the first metal layer 114 has metal ribs 115 extending to the polymer layer 112.

Meanwhile, the polymer layer 112 may be formed of a material including, for example, polyethylene terephthalate (PET), polyimide (PI), or polyethylenenaphthalate (PEN).

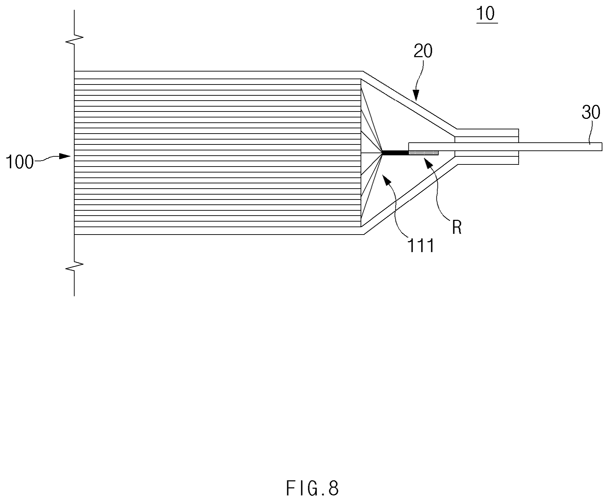

FIG. 8 is a cross-sectional view showing a secondary battery including an electrode current collector according to an embodiment of the present disclosure.

Meanwhile, referring to FIGS. 5 to 8, in the electrode assembly 100, multiple electrodes 130 and separators 140 may be stacked. In this case, the electrode tabs 111 of the electrode current collectors 110 provided on each of multiple electrodes 130 are collected and welded together, and the metal ribs 115 may be positioned at the welded portion R of the electrode tab 111. In this case, the electrode lead 30 may be welded together at the welded portion R. Accordingly, when welding the metalized electrode current collector 110, the metal ribs 115 may be positioned at the welded portion R of the electrode tab 111, thereby significantly improving weldability. That is, the weldability between the electrode tabs 111 and the weldability between the electrode tabs 111 and the electrode lead 30 may be significantly improved.

Meanwhile, the electrode 130 may include a positive electrode 130a and a negative electrode 130b. And, the separator 140 separates the positive electrode 130a and the negative electrode 130b from each other to electrically insulate them.

The positive electrode 130a may include a positive electrode current collector 110a and a positive electrode active material 120a provided on one surface of the positive electrode current collector 110a. In this case, the positive electrode 130a may include a positive electrode uncoated portion, which is a region where the positive electrode active material 120a is not coated.

The positive electrode active material 120a may be made of lithium manganese oxide, lithium cobalt oxide, lithium nickel oxide, lithium iron phosphate, or a compound or mixture including one or more of these.

The negative electrode 130b may include a negative electrode current collector 110b and a negative electrode active material 120b provided on one surface of the negative electrode current collector 110b. In this case, the negative electrode 130b may include a negative electrode uncoated portion, which is a region where the negative electrode active material 120b is not coated.

The negative electrode active material 120b may be made of, for example, artificial graphite, lithium metal, lithium alloy, carbon, petroleum coke, activated carbon, graphite, silicon compound, tin compound, titanium compound, or an alloy thereof. In this case, the negative electrode active material 120b may further include, for example, non-graphite silica (SiO), silicon carbide (SiC), or the like.

Meanwhile, the positive electrode current collector 110a and the negative electrode current collector 110b may include a polymer layer 112 and a first metal layer 114 and a second metal layer 113 laminated on both surfaces of the polymer layer 112 in the stacking direction D.

In this case, the first metal layer 114 and the second metal layer 113 located on the positive electrode current collector 110a may include an aluminum material, and the first metal layer 114 and the second metal layer 113 located on the negative electrode current collector 110b may include a copper material.

Meanwhile, referring to FIG. 2, as a first example, the metal ribs 115 may extend from the first metal layer 114 to the polymer layer 112, and the ends of the metal ribs 115 may be spaced apart from the second metal layer 113 by a regular interval.

Referring to FIG. 5, as a second example, the metal ribs 115 may extend from the first metal layer 114 to the polymer layer 112, and the ends of the metal ribs 115 may be in contact with the second metal layer 113.

Meanwhile, referring to FIG. 8, a secondary battery 10 may be manufactured including an electrode assembly 100 according to an embodiment of the present disclosure configured as described above. That is, the electrode assembly 100 may be accommodated in a pouch 20 to form a secondary battery 10. In this case, a secondary battery 10 may be formed by further including an electrode lead 30 that is connected to the electrode assembly 100 to electrically connect it to the outside of the pouch 20.

Method for manufacturing electrode current collector according to embodiment

Hereinafter, a method for manufacturing an electrode current collector according to an embodiment of the present disclosure will be described.

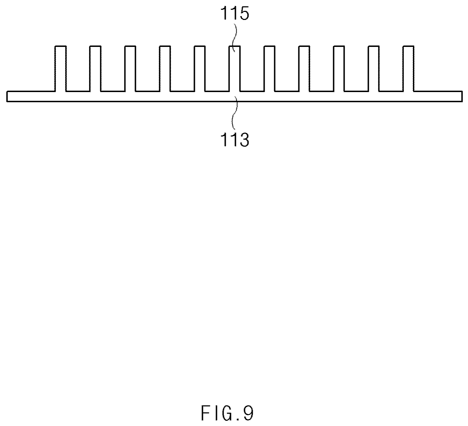

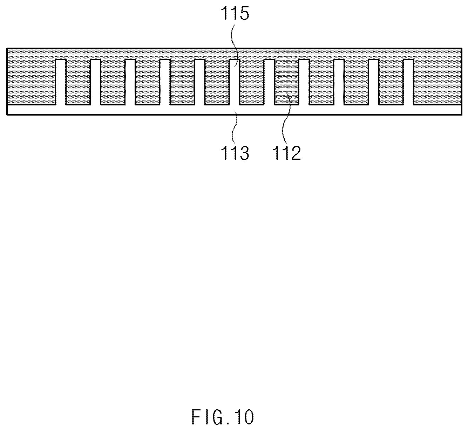

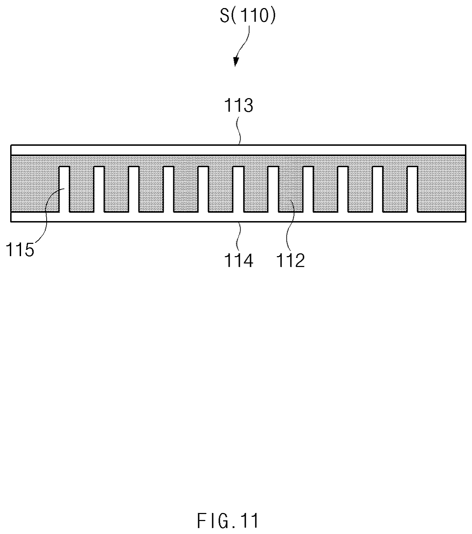

FIG. 9 is a cross-sectional view showing a rib formation process in a method for manufacturing an electrode current collector according to an embodiment of the present disclosure, FIG. 10 is a cross-sectional view showing a polymer lamination process in a method for manufacturing an electrode current collector according to an embodiment of the present disclosure, and FIG. 11 is a cross-sectional view showing a second metal layer lamination process in a method for manufacturing an electrode current collector according to an embodiment of the present disclosure.

Referring to FIGS. 9 to 11, the method for manufacturing the electrode current collector according to an embodiment of the present disclosure is a method for manufacturing an electrode current collector, and includes a rib formation process for forming metal ribs 115 extending in the stacking direction D on a first metal layer 114, a polymer lamination process for laminating a polymer layer 112 on the first metal layer 114 after the rib formation process, a second metal layer lamination process for laminating a second metal layer 113 on the polymer layer 112 after the polymer lamination process to form a stack S, and a tab formation process for notching an end portion of the stack S to form an electrode tab 111.

The method for manufacturing an electrode current collector according to an embodiment of the present disclosure relates to a method for manufacturing an electrode current collector for manufacturing an electrode current collector according to an embodiment of the present disclosure and an electrode current collector included in an electrode assembly according to an embodiment of the present disclosure, which are described above.

Therefore, the embodiment of the method for manufacturing an electrode current collector according to an embodiment of the present disclosure is to be described by omitting or briefly describing the content overlapping with the embodiments of the present disclosure described above and focusing on differences.

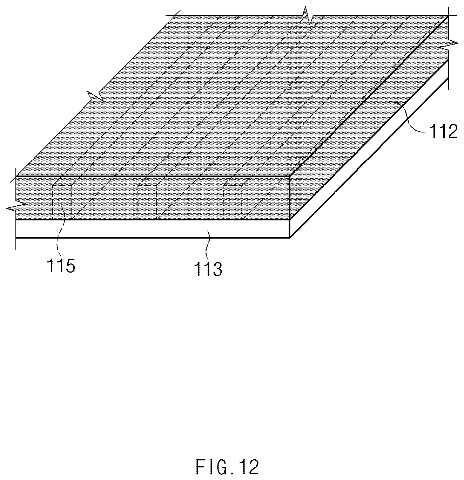

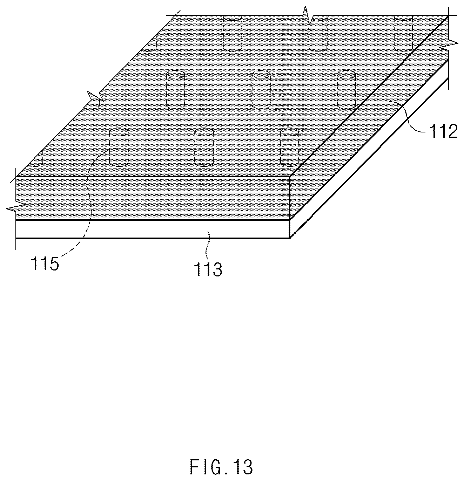

FIG. 12 is a perspective view showing an example of a rib formation process and a polymer lamination process in a method for manufacturing an electrode current collector according to an embodiment of the present disclosure. FIG. 13 is a perspective view showing another example of a rib formation process and a polymer lamination process in a method for manufacturing an electrode current collector according to an embodiment of the present disclosure.

More specifically, referring to FIGS. 9, 12, and 13, in the rib formation process, the metal ribs 115 extending in the stacking direction D on the first metal layer 114 are formed.

Additionally, in the rib formation process, the metal ribs 115 may be formed by etching one surface of the first metal layer 114. In this case, in the rib formation process, a mask having a patterned hole formed on one surface of the first metal layer 114 is laminated, and then one surface of the first metal layer 114 is etched by pouring an etching solution onto the top of the mask, so that the etching solution enters the part where the pattern hole is formed, thereby forming metal ribs 115 having a cross-section corresponding to the pattern hole formed in the mask.

In addition, in the rib formation process, the metal ribs 115, 115' may be formed in the form of multiple walls or cylinders.

In the rib formation process, as an example, the metal ribs 115 may be formed in the area where the electrode tab 111 is formed on one surface of the first metal layer 114.

In the rib formation process, as another example, the metal ribs 115 may be formed in the entire area of one surface of the first metal layer 114.

Referring to FIG. 10, in the polymer lamination process, the polymer layer 112 is laminated on the first metal layer 114 after the rib formation process.

Referring to FIGS. 2 and 10, in the polymer lamination process, as a first example, the polymer layer 112 may be formed by pouring the polymer on one surface of the first metal layer 114 to have a thickness greater than the height h1 of the metal rib 115 in the stacking direction D.

Referring to FIG. 5, in the polymer lamination process, as a second example, the polymer layer 112 may be formed by pouring the polymer on one surface of the first metal layer 114 to have a thickness corresponding to the height h1 of the metal rib 115 in the stacking direction D. That is, in the polymer lamination process, the thickness t4 of the polymer layer 112 may be formed to be the same as the height of the metal rib 115 in the stacking direction D.

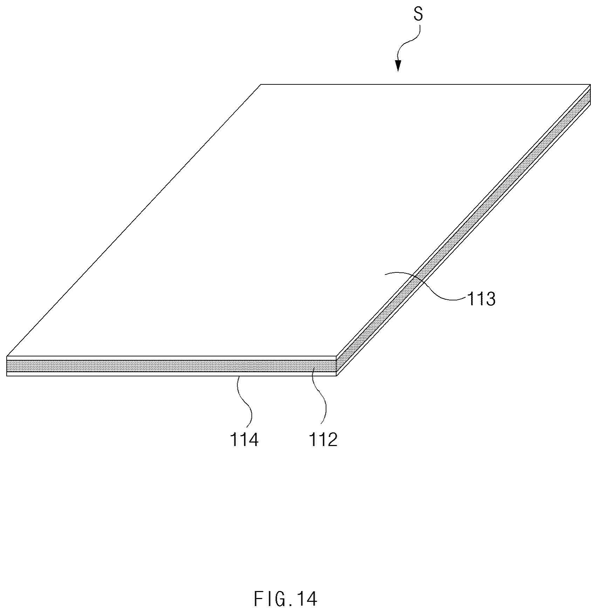

FIG. 14 is a perspective view showing a second metal layer lamination process in a method for manufacturing an electrode current collector according to an embodiment of the present disclosure.

Referring to FIGS. 11 and 14, in the second metal layer lamination process, the stack S is formed by laminating the second metal layer 113 on the polymer layer 112 after the polymer lamination process.

Additionally, in the second metal layer lamination process, the second metal layer 113 may be laminated by depositing metal on one surface of the polymer layer 112. Here, in the second metal layer lamination process, the metal may be deposited on one surface of the polymer layer 112 through a physical vapor deposition (PVD) deposition method.

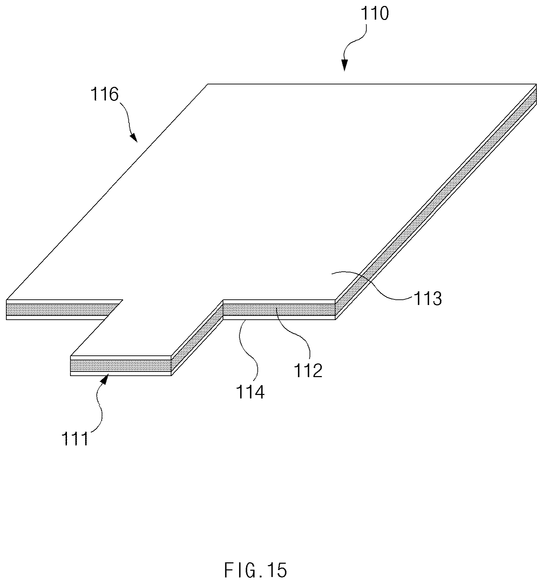

FIG. 15 is a perspective view showing a tab formation process in a method for manufacturing an electrode current collector according to an embodiment of the present disclosure.

Referring to FIG. 15, in the tab formation process, an electrode tab 111 may be formed by notching an end portion of the stack S.

That is, in the tab formation process, the electrode tab 111 may be formed in a protruding shape by cutting one side of the stack S in which the first metal layer 114 and the second metal layer 113 are laminated on both surfaces of the polymer layer 112.

Additionally, the tab formation process may include notching so that the electrode tab 111 is formed in the stack S using a punch die or laser.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10: Secondary battery
20: Pouch
30: Electrode lead
100: Electrode assembly
110, 210: Electrode current collector
110a: Positive electrode current collector
110b: Negative electrode current collector
111: Electrode tab
112: Polymer layer
113: Second metal layer
114: First metal layer
115, 115': Metal rib
116: Body
120: Electrode active material
120a: Positive electrode active material
120b: Negative electrode active material
130: Electrode
130a: Positive electrode
130b: Negative electrode
140: Separator
D: Stacking direction
R: Welded portion
S: Stack

## Claims

1. An electrode current collector comprising an electrode tab extending at an end, comprising:
a polymer layer and a first metal layer and a second metal layer laminated on both surfaces of the polymer layer,
wherein in the electrode tab, the first metal layer has metal ribs extending to the polymer layer.

2. The electrode current collector according to claim 1,
wherein the metal ribs protrude from the inner surface of the first metal layer to the polymer layer and are formed along the inner surface of the first metal layer.

3. The electrode current collector according to claim 2,
wherein the metal ribs are formed in the form of rectangular walls and are provided in multiples at regular intervals.

4. The electrode current collector according to claim 2,
wherein the metal ribs are provided in the form of multiple cylinders.

5. The electrode current collector according to claim 2,
wherein the ends of the metal ribs are spaced apart from the second metal layer by a regular interval.

6. The electrode current collector according to claim 5,
wherein the spacing between the ends of the metal ribs and the second metal layer is 2 to 8 um.

7. The electrode current collector according to claim 2,
wherein the metal ribs are in contact with the second metal layer.

8. The electrode current collector according to any one of claims 1 to 7, comprising:
a body having an electrode active material coated on the outer surface; and
the electrode tab extending from the body,
wherein the metal ribs are further provided on the body.

9. An electrode assembly in which electrodes and separators are alternately stacked,
wherein the electrode comprises an electrode current collector comprising an electrode tab extending at an end, and
the electrode current collector comprises a polymer layer and a first metal layer and a second metal layer laminated on both surfaces of the polymer layer in the stacking direction,
wherein in the electrode tab, the first metal layer has metal ribs extending to the polymer layer.

10. A method for manufacturing the electrode current collector, comprising:
a rib formation process for forming metal ribs extending in the stacking direction on a first metal layer;
a polymer lamination process for laminating a polymer layer on the first metal layer after the rib formation process;
a second metal layer lamination process for laminating a second metal layer on the polymer layer after the polymer lamination process to form a stack; and
a tab formation process for notching an end portion of the stack to form an electrode tab.

11. The method for manufacturing the electrode current collector according to claim 10,
wherein in the rib formation process, the metal ribs are formed by etching one surface of the first metal layer.

12. The method for manufacturing the electrode current collector according to claim 10,
wherein in the rib formation process, the metal ribs are formed in the form of multiple walls or columns.

13. The method for manufacturing the electrode current collector according to claim 10,
wherein in the polymer lamination process, the polymer layer is formed by pouring the polymer on one surface of the first metal layer to have a thickness greater than the height of the metal rib in the stacking direction.

14. The method for manufacturing the electrode current collector according to claim 10,
wherein in the polymer lamination process, the polymer layer is formed by pouring the polymer on one surface of the first metal layer to have a thickness corresponding to the height of the metal rib in the stacking direction.

15. The method for manufacturing the electrode current collector according to claim 10,
wherein in the second metal layer lamination process, the second metal layer is laminated by depositing metal on one surface of the polymer layer.

16. The method for manufacturing the electrode current collector according to claim 10,
wherein in the rib formation process, the metal ribs are formed in the area where the electrode tab is formed on one surface of the first metal layer.

17. The method for manufacturing the electrode current collector according to claim 10,
wherein in the rib formation process, the metal ribs are formed in the entire area of one surface of the first metal layer.
